# EUROPEAN PATENT APPLICATION

(11) **EP 4 769 434 A1**
(43) Date of publication of application: **01.07.2026**
(21) Application number: 24307346.7
(22) Date of filing: 31.12.2024
(51) Int. Cl.: G21C 3/344, G21C 3/352

(54) **SPACER GRID ELEMENTS FOR NUCLEAR FUEL ASSEMBLY SPACER GRID, SPACER GRIDS AND NUCLEAR FUEL ASSEMBLY**

(71) Applicant: FRAMATOME, 92400 Courbevoie (FR)
(72) Inventor: BLANC, Pascal Didier, 64295 DARMSTADT (DE); FINZEL, Sven, 91301 FORCHHEIM (DE)
(74) Representative: Lavoix

(57) **Abstract**

The spacer grid elements (18) define cells (16) for receiving nuclear fuel rods (4). The spacer grid elements (18) are configured to be arranged side-by-side with applying two side walls (22) of two adjacent spacer grid elements (18) one against the other. One of the two side walls (22) of at least one pair of side walls (22) applied against each other is provided with a lower flap (34) protruding from the lower edge of said side wall (22) such as to at least partially cover the lower edge (22A) of the other side wall and/or one of the two side walls (22) of said at least one pair of side walls (22) applied against each other is provided with an upper flap (34) protruding from the upper edge of said side wall (22) such as to at least partially cover the upper edge (22B) of the other side wall.

## Description

The present invention relates to a spacer grid element of a spacer grid of a nuclear fuel assembly.

A nuclear fuel assembly generally comprises fuel rods containing fissile materials and an armature for supporting the fuel rods. The armature comprises generally a lower nozzle and an upper nozzle spaced along an assembly axis, guide thimbles (also named guide tubes) extending along the assembly axis with connecting the lower nozzle to the upper nozzle, and spacer grids distributed along the guide thimbles with being fastened to the guide thimbles. The fuel rods are positioned between the lower nozzle and the upper nozzle with extending though the spacer grids, the spacer grids being configured for supporting the fuel rods axially and transversely with maintaining the fuel rods in a transversely spaced relationship.

Each spacer grid may be made of a plurality of cell-shaped or tubular spacer grid elements assembled together to form a spacer grid, each spacer grid element being configured for receiving one of the fuel rods.

Each spacer grid element is provided with one or more springs and/or one or more dimples for contacting the fuel rod extending through the spacer grid element and maintaining the fuel rod axially and/or transversely.

WO2022136178A1 discloses a spacer grid made of a plurality of tubular spacer grid elements with specific polygonal cross-section.

In operation, the nuclear fuel assembly is positioned in a nuclear reactor core in a nuclear reactor vessel, the nuclear reactor core being made of a plurality nuclear fuel assemblies arranged side-by-side with their longitudinal axes extending vertically, and a coolant fluid flow through the reactor core to moderate the nuclear reaction and to collect thermal energy from the nuclear fuel rods of the nuclear fuel assembly.

It is desirable to ensure an appropriate support of the fuel rods of a nuclear fuel assembly whilst limiting the flow resistance of the nuclear fuel assembly.

One of the aims of the invention is to provide a spacer grid element for a spacer grid adapted to ensure an appropriate support of the fuel rods of a nuclear fuel assembly whilst limiting the flow resistance of the spacer grid.

To this end, the invention proposes a spacer grid element for a nuclear fuel assembly spacer grid, each spacer grid element defining at least one side wall of a cell extending along an extension axis for receiving a nuclear fuel rod, wherein spacer grid elements are configured to be arranged side-by-side with applying two side walls of two spacer grid elements one against the other, wherein one of the two side walls of at least one pair of side walls applied against each other is provided with a lower flap protruding from the lower edge of said side wall such as to at least partially cover the lower edge of the other side wall in view along the extension axes of the cells and/or one of the two side walls of said at least one pair of side walls applied against each other is provided with an upper flap protruding from the upper edge of said side wall such as to at least partially cover the upper edge of the other side wall in view along the extension axes of the cells.

In specific embodiments, the spacer grid element comprises one or several of the following optional features, taken individually or in any technically feasible combination:
- one of the two side walls of at least one pair of side walls applied against each other is provided with a lower flap and an upper flap;
- one of the two side walls of at least one pair of side walls applied against each other is provided with a lower flap and deprived of an upper flap;
- the other one of the two side walls is deprived of a lower flap and an upper flap or is deprived a lower flap and provided with an upper flap;
- one of the two sides walls of at least one pair of side walls applied against each other is a supporting side wall provided with a supporting feature protruding inwardly in a cell delimited by said side walls to contact a fuel rod extending in said cell and/or one of the two sides walls of at least one pair of side walls applied against each other is a non-supporting side wall deprived of supporting feature for contacting a fuel rod extending in said cell;
- each spacer grid element defines a respective cell and includes side walls distributed around the extension axis.

The invention also relate to a spacer grid comprising a plurality of spacer grid elements as defined above, arranged side-by-side.

The invention also relates to a spacer grid for a nuclear fuel assembly spacer grid, the spacer grid comprising cells for receiving a nuclear fuel rod, each cell extending along an extension axis with being delimited by side walls, wherein the side walls comprises at least one pair of side walls applied against each other, wherein one of the two side walls is provided with a lower flap protruding from the lower edge of said side wall such as to at least partially cover the lower edge of the other side wall in view along the extension axis and/or one of the two side walls is provided with an upper flap protruding from the upper edge of said side wall such as to at least partially cover the upper edge of the other side wall in view along the extension axis.

In specific embodiments, the spacer grid comprises one or several of the following optional features, taken individually or in any technically feasible combination:
- one of the two side walls of at least one pair of side walls applied against each other is provided with a lower flap and an upper flap;
- one of the two side walls of at least one pair of side walls applied against each other is provided with a lower flap and deprived of an upper flap;
- the other one of the two side walls is deprived of a lower flap and an upper flap or is deprived a lower flap and provided with an upper flap;
- one of the two sides walls of at least one pair of side walls applied against each other is a supporting side wall provided with a supporting feature protruding inwardly in a cell delimited by said side walls to contact a fuel rod extending in said cell and/or one of the two sides walls of at least one pair of side walls applied against each other is a non-supporting side wall deprived of supporting feature for contacting a fuel rod extending in said cell;
- the spacer grid comprises spacer grid elements arranged side-by-side, each spacer grid element defining a respective cell and comprising side walls, wherein the two side walls of each pair of side walls applied against each other of the spacer grid are side walls of two adjacent spacer grid elements arranged side-by-side;
- the spacer grid being formed of intersecting strips, each strip comprising a plurality of wall portions, each wall portion defining a respective side wall of a cell, each pair of side walls applied against each other being two wall portions of two distinct strips applied against each other.

The invention also relates to a nuclear fuel assembly comprising a bundle of fuel rods and an armature for supporting the fuel rods, the armature comprising at least one spacer grid as defined above.

The invention and its advantages will be better understood on reading the following description that is given solely by way of non-limiting example and with reference to the appended drawings, in which:
- Figure 1 is a schematic side elevation view of a nuclear fuel assembly;
- Figure 2 is a partial top view of a spacer grid for a nuclear fuel assembly, the spacer grid comprising spacer grid elements arranged side-by-side;
- Figure 3 is a top view of two adjacent spacer grid elements of the spacer grid of Figure 2;
- Figure 4 is a section view of the two spacer grid elements of Figure 3 in contact with each other via said side walls according to a first embodiment;
- Figure 5 is an enlarged view of the detail on zone V on Figure 4;
- Figures 6 - 9 are sectional views of pairs of side walls separating two adjacent cells according to four embodiments;
- Figure 10 is a partial top view of a spacer grid for a nuclear fuel assembly, the spacer grid comprising spacer grid elements arranged side-by-side;
- Figure 11 - 13 are sectional views of pairs of side walls separating two adjacent cells according to three embodiments;
- Figure 14 is a side elevation view of another nuclear fuel assembly.

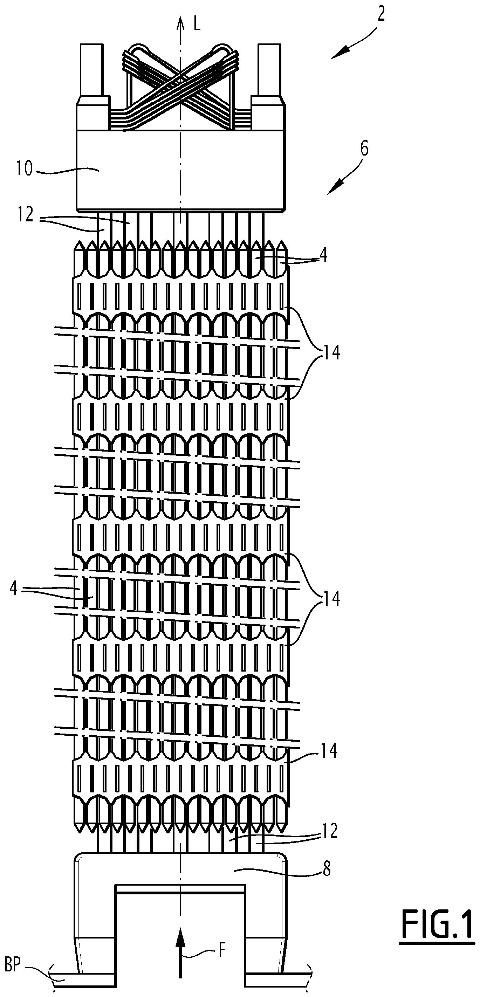

The nuclear fuel assembly 2 of Figure 1 comprises a bundle of nuclear fuel rods 4 and an armature 6 for supporting the fuel rods 4. The fuel assembly 2 is elongated along an assembly axis L.

The armature 6 comprises a lower nozzle 8, an upper nozzle 10, a plurality of guide thimbles 12 and a plurality of spacer grids 14.

The lower nozzle 8 and the upper nozzle 10 are spaced along the assembly axis L. The guide thimbles 12 extend parallel to the assembly axis L and connect the lower nozzle 8 to the upper nozzle 10.

Each guide thimble 12 opens upwards through the upper nozzle 10 for allowing insertion of a control rod (not shown) into the guide thimble 12.

The spacer grids 14 are distributed along the guide thimbles 12 and are secured to the guide thimbles 12, for instance by welding. Each spacer grid 14 extends transversely to the assembly axis L.

Each fuel rod 4 comprises for example a tubular cladding, pellets of nuclear fuel stacked inside the cladding and end plugs closing the ends of the cladding (not shown).

Each fuel rod 4 extends parallel to the assembly axis L through the spacer grids 14, with being supported longitudinally and/or transversely relative to assembly axis L by the spacer grids 14. The fuel rods 4 are maintained in a transversely spaced relationship by the spacer grids 14.

In operation, the fuel assembly 2 is placed in the core of a nuclear reactor with the lower nozzle 8 resting on a bottom plate BP of the core and the assembly axis L being substantially vertical. A coolant flows upwardly from an inlet of the bottom plate BP, through the fuel assembly 2, with passing along the fuel rods 4 and through the lower nozzle 8, the spacer grids 14 and the upper nozzle 10 as illustrated by arrow F on Figure 1.

In the following, the term "lower" and "upper" refer to the position of the nuclear fuel assembly 2 in the nuclear reactor core, with the coolant fluid flowing vertically upwardly in the nuclear fuel assembly 2.

The fuel rods 4 of the fuel assembly 2 are maintained in a transversely spaced relationship with being located at the nodes of an imaginary network, such as a rectangular network or a hexagonal network.

The bundle of fuel rods 4 of the fuel assembly 2 exhibits for example a rectangular contour, in particular a square contour, the fuel rods 4 being maintained transversely in a space relationship with the fuel rod 4 located at the nodes on an imaginary rectangular network. The guide thimbles 12 are integrated in the bundle and received at nodes of the imaginary network.

The nuclear fuel assembly 2 is for example designed for a PWR (acronym for Pressurized Water Reactor). In a variant, the nuclear fuel assembly 2 is for example designed for a BWR (acronym for Boiling Water Reactor).

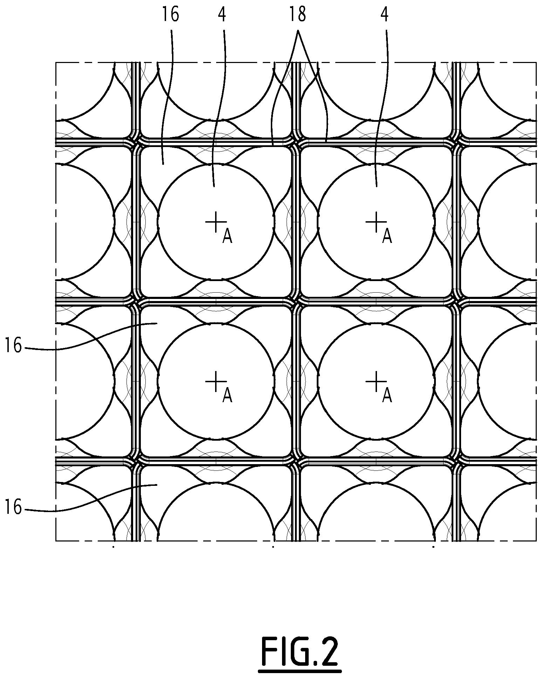

In the fuel assembly 2 represented on Figure 1, the spacer grids 14 are similar to each other and one spacer grid 14 will be further described with reference to Figure 2 which is a partial top view of a spacer grid 14.

As illustrated on Figure 2, the spacer grid 14 comprises a plurality of cells 16 arranged side-by-side. Each cell 16 extends through the spacer grid 14 along a respective extension axis A.

The cells 16 are located at the nodes of an imaginary network corresponding to the desired transverse spaced relationship for the fuel rods 4. In particular, the cells 16 are located at the nodes of an imaginary rectangular network.

The spacer grid 14 comprises for example a plurality of spacer grid elements 18 arranged side-by-side. Each spacer grid element 18 is tubular and defines a respective cell 16 of the spacer grid 14.

Each spacer grid element 18 is configured for receiving one of the fuel rods 4 or one of the guide thimbles 12 extending through the spacer grid 14 via the cell 16 defined by the spacer grid element 18. Only some fuel rods 4 are represented on Figure 2 for sake of illustration.

The spacer grid element 18 are located at the nodes of an imaginary network corresponding to the desired transverse spaced relationship for the fuel rods 4. In particular, the spacer grid element 18 are located at the nodes of an imaginary rectangular network.

The spacer grid 14 advantageously comprises a peripheral belt (not illustrated) extending around the spaced grid element 18. The peripheral belt is for example formed of one or more peripheral straps.

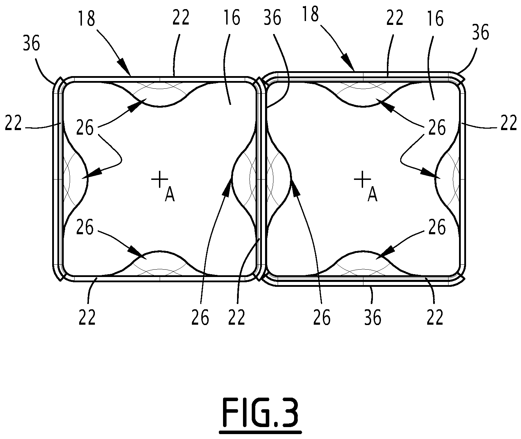

Two adjacent spacer grid elements 18 of the spacer grid 14 are illustrated on Figure 3.

Each spacer grid element 18 is tubular and extends along a respective extension axis A. The extension axis A is perpendicular to the plane of the spacer grid 14 (plane of Figure 3). The extension axis A is substantially parallel to the assembly axis L. The fuel rod 4 received in each spacer grid element 18 extends through this spacer grid element 18 along the extension axis A.

Each spacer grid element 18 comprises a plurality of side walls 22 distributed around the extension axis A of this spacer grid element 18. Each side wall 22 defines a respective portion of the circumference of the spacer grid element 18.

The spacer grid element 18 exhibits for example a square cross-section in view in the extension axis A, each side wall 22 defining a respective side of the cross-section.

Each side wall 22 is optionally provided with a supporting feature 26 protruding from the side wall 22 inwardly in the cell delimited by the side wall 22. Each supporting feature 26 protrudes from the corresponding side wall 22 towards the extension axis A of the spacer grid element. Each supporting feature 26 protrudes inwardly to contact a fuel rod 4 received in the spacer grid element 18. Each supporting feature 26 is for example a spring or a dimple. A spring is elastically deformable and a dimple is rigid.

Each supporting feature 26 is for example provided as a bulge integrally formed in the corresponding supporting side wall 22.

Each side wall 22 provided with a supporting feature is also designated as a supporting side wall 22. Each side wall 22 deprived of a supporting feature is also designated as a non-supporting side wall 22.

As illustrated on Figures 2 and 3, each side wall 22 of each spacer grid element 18 is provided with a supporting feature 26.

In other examples, each spacer grid element 18 comprises one or more supporting side walls 22, in particular two or more supporting side walls 22, and one or more non-supporting side walls 22.

In some examples, each spacer grid element 18 comprises supporting side walls 22 alternating with non-supporting side walls 22 around the extension axis A.

The spacer grid elements 18 are configured to be arranged side-by-side to form the spacer grid 14 with applying side walls 22 of adjacent spacer grid elements 18 against each other with forming double walled structures separating the cells 16, each double wall structure being form a one side wall 22 of one of the spacer grid elements 18 applied against one side wall 22 of another one of the spacer grid elements 18.

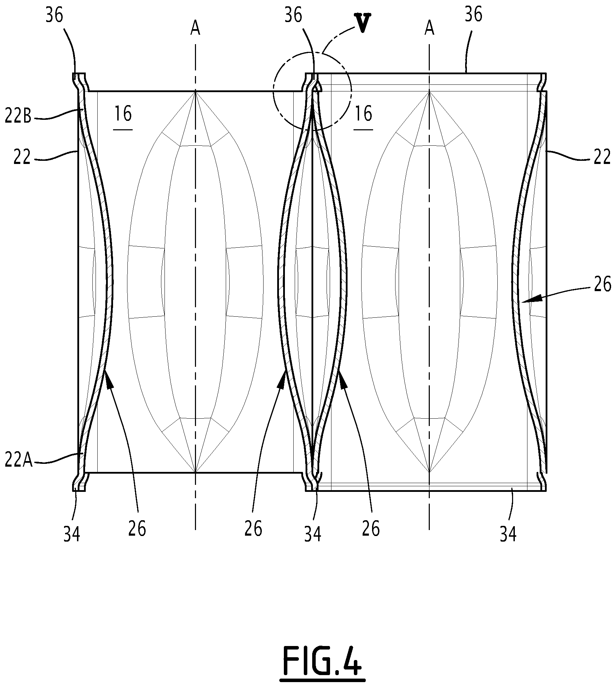

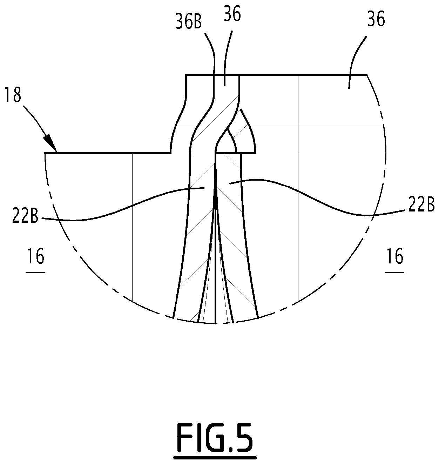

As illustrated on Figures 4 and 5, at least one side wall 22 of one or more of the spacer grid elements 18 is provided with a lower flap 34 protruding downwardly and outwardly from the lower edge 22A of the side wall 22 and/or an upper flap 36 protruding upwardly and outwardly from the upper edge 22B of the side wall 22.

Each lower flap 34 extends preferably on the entire width of the corresponding side wall 22.

Each upper flap 36 extends preferably on the entire width of the corresponding side wall 22.

As illustrated on Figure 3, spacer grid elements 18 are arranged side-by-side such that two adjacent spacer grid elements 18 contact each other via side walls 22 of the spacer grid element 18 applied one onto the other.

Two cells defined by two adjacent spacer grid elements 18 are separated by a double wall formed of one side wall of one of the two spacer grid elements 18 applied against one side wall of the other one of the two spacer grid elements 18. This allows obtaining a spacer grid with appropriate stiffness.

In some examples, two adjacent spacer grid elements 18 contact each other via a supporting side wall 22 of one of the two adjacent spacer grid elements 18 applied in contact with a non-supporting side wall 22 of the other one of the of the two adjacent spacer grid elements 18.

In some embodiments, each supporting side wall 22 of each internal spacer grid element 18 is applied in contact against a non-supporting side wall 22 of an adjacent spacer grid element 18.

As illustrated on Figure 4, advantageously, in one or more pairs of side walls 22 of adjacent spacer grid elements 18 applied in contact with each other, in particular in each pair of side walls 22 of two adjacent spacer grid elements 18 applied in contact with each other, one of the two side walls 22 is provided with a lower flap 34 and/or one of the two side walls 22 is provided with an upper flap 36.

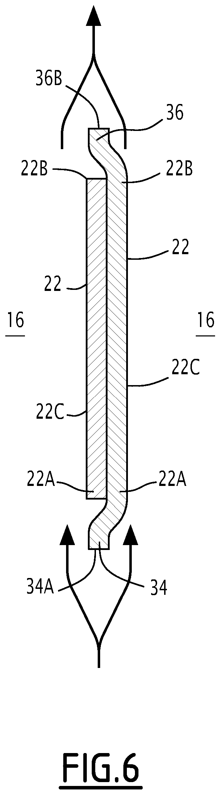

In some examples, as illustrated on Figure 6, in one or more pairs of side walls 22 of adjacent spacer grid elements 18 applied in contact with each other, in particular in each pair of side walls 22 of two adjacent spacer grid elements 18 applied in contact with each other, one of the two side walls 22 applied against each other is provided with a lower flap 34 and an upper flap 36, the other deprived of lower flap 34 and upper flap 36.

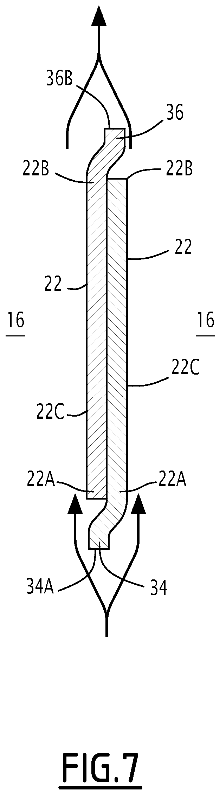

In some examples, as illustrated on Figure 7, in one or more pairs of side walls 22 of adjacent spacer grid elements 18 applied in contact with each other, in particular in each pair of side walls 22 of two adjacent spacer grid elements 18 applied in contact with each other, one of the two side walls 22 is provided with a lower flap 34 and deprived of upper flap 36, the other being deprived of lower flap 34 and provided with an upper flap 36.

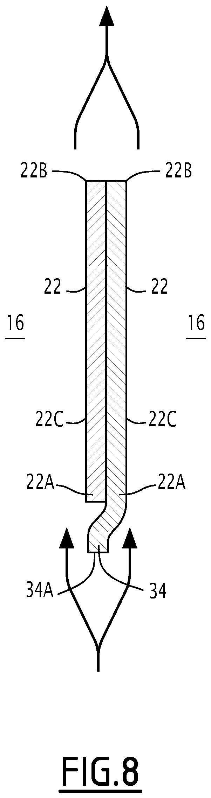

In some examples, as illustrated on Figure 8, in one or more pairs of side walls 22 of adjacent spacer grid elements 18 applied in contact with each other, in particular in each pair of side walls 22 of two adjacent spacer grid elements 18 applied in contact with each other, one of the two side walls 22 is provided with a lower flap 34 and deprived of upper flap 36, the other being deprived of lower flap 34 and upper flap 36.

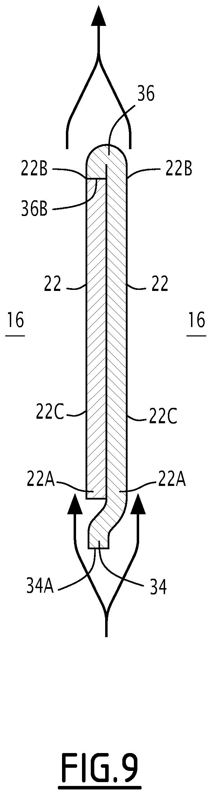

In some examples, as illustrated on Figure 9, in one or more pairs of side walls 22 of adjacent spacer grid elements 18 applied in contact with each other, in particular in each pair of side walls 22 of two adjacent spacer grid elements 18 applied in contact with each other, one of the two side walls 22 is provided with an upper flap 36 configured to define a rounded upper edge for the pair of side walls 22.

The upper flap 36 is for example folded downward so that the free edge of the upper flap 36 faces the upper edge 22B of the other one of the two side walls 22. The fold of the upper flap 36 thus defines a rounded upper edge for the pair of side walls 22.

Preferably, as illustrated on Figure 9, one of the two side walls 22 is provided with a lower flap lower flap 34. In some examples, one of the two side walls 22 is provided with the lower flap 34 and the upper flap 36. In other examples, one of the two side walls 22 is provided with the lower flap 34 and the other one of the two sides walls is provided with the upper flap 36 defining an upper rounded edge 36.

In these examples, each one of the two side walls 22 applied against each other is a supporting side wall 22 provided with a supporting feature 26 or a non-supporting side wall 22 deprived of supporting feature 26.

As illustrated by the arrows on Figures 6 - 9, in each pair of side walls 22 applied against each other, the provision of a lower flap 34 protruding downwardly and outwardly from the lower edge of one of the side walls 22 and/or of an upper flap 36 protruding upwardly and outwardly from one the upper edge of one of the side walls 22, streamlines the flow of the coolant fluid.

Each lower flap 34 protrudes downwardly from the lower edge of one of two side wall 22 applied against each other with covering the lower edge of the other side wall 22 in view along the extension axis A.

Preferably, each lower flap 34 protrudes downwardly from the lower edge of one of two side wall 22applied against each other with extending upstream the lower edge of the other side wall 22. The lower edge of the other side wall 22 is in the slipstream of the lower flow 34.

Preferably, each lower flap 34 protrudes downwardly from the lower edge of one of the two side wall 22 such that the lower free edge 34A of the lower flap 34 is at least partially in line with the lower edge of the other one of the two side walls 22 in view along the extension axis A.

Preferably, each lower flap 34 protrudes downwardly from the lower edge of one of the two side walls 22 downwardly and towards the other one of the two side walls 22 but without protruding from the face of the other one of the two walls 22 opposed to the side wall 22 provided with the lower flap 34.

Preferably, each lower flap 34 is preferably configured such that the lower free edge 34A of the lower flap 34 is located transversely between the internal faces 22C of the two side walls 22.

In some examples, each lower flap 34 protrudes downwardly from the lower edge 22A of one of two side walls 22 applied against each other such that the lower free edge 34A of the lower flap 34 faces downwardly (Figure 6 - 9).

In some examples, each lower flap 34 protrudes downwardly from the lower edge 22A of one of two side walls 22 with being folded twice in two opposite directions such that the free edge 34A of the lower flap 34 is in-line with the lower edge 22A other one of the two side walls 22 with facing downwardly (Figure 6 - 9).

Each upper flap 36 protrudes upwardly from the upper edge of one of two side wall 22 applied against each other with covering the upper edge of the other side wall 22 in view along the extension axis A.

Preferably, each upper flap 36 protrudes upwardly from the upper edge of one of two side walls 22 applied against each other with extending downstream the upper edge of the other side wall 22. The upper flap 36 is in the streamline of the upper edges of the two side walls 22.

Preferably, each upper flap 36 protrudes upwardly from the upper edge of one of two side walls 22 applied against each other such that the free edge 36B of the upper flap 36 is located at least partially in line with other one of the two side walls 22 in view along the extension axis A.

Preferably, each upper flap 36 protrudes upwardly from the upper edge of one of two side walls 22 applied against each other without protruding from the face of the other one of the two walls 22 opposed to the side wall 22 provided with the upper flap 36.

Preferably, each upper flap 36 protrudes upwardly from the upper edge 22B of one of two side walls 22 applied against each other such that the free edge 36B of the upper flap 36 is located transversely between the internal faces 22C of the two side walls 22.

In some examples, each upper flap 36 protrudes upwardly from the upper edge 22B of one of two side walls 22 applied against each other such that the free edge 36B of the upper flap 36 faces upwardly (Figure 6 and 7).

In some examples, each upper flap 36 protrudes upwardly and outwardly from the upper edge 22B of one of two side walls 22 with being folded twice in two opposite directions such that the free edge 36B of the upper flap 36 is in-line with the other one of the two side walls 22 with facing upwardly (Figure 6 and 7).

In some examples, each upper flap 36 has a proximal portion protruding upwardly and outwardly from the upper edge 22B of one of two side walls 22 and a distal portion folded downwardly such a to be in-line with the upper edge 22B of the other one of the two side walls 22 (Figure 9). The free edge 36B of the upper flap 36 faces for examples downwardly and/or faces the upper edge 22B of the other one of the two side walls 22.

Each spacer grid element 18 of the spacer grid 14 is for example manufactured by cutting and/or shaping a sheet of material, in particular a sheet of metal, and rolling the sheet of material around an extension axis A to impart a tubular shape to the sheet of material and thus obtaining the spacer grid element 18.

The cutting and/or shaping step comprises for example shaping each side wall 22 and/or forming a supporting feature 26 and/or forming a lower flap 34 and/or forming an upper flap 36. Other embodiments and variants of the invention may be contemplated.

As illustrated on Figure 4, in some examples, the spacer grid 14 comprises at least one pair of side walls 22 applied against each other with the lower edges 22A of the side walls 22 being in contact with each other over their entire extent and the upper edges 22B being in contact with each other over their entire extent.

This prevents coolant fluid to flow via a cavity defined between the two side walls 22 applied against each other, even if one or each side wall 22 of the pair of side walls is provided with a supporting feature 26 as illustrated on Figure 4.

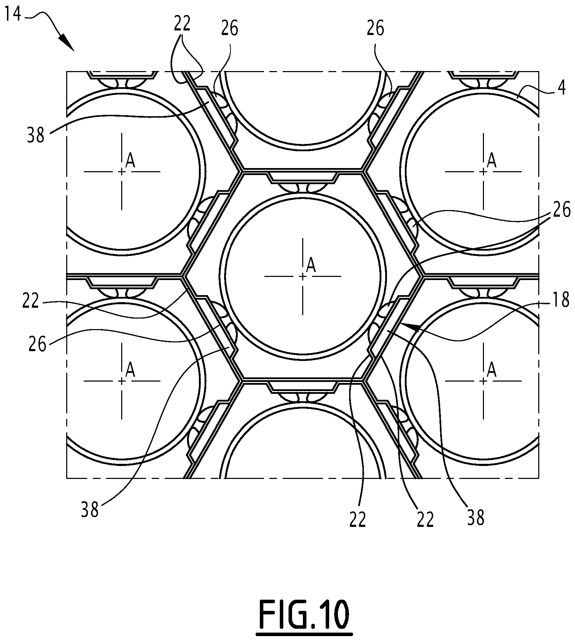

As illustrated on Figure 10, the spacer grid 14 comprises at least one pair of side walls 22 applied against each other with defining a channel 38 between them, the cavity opening on the lower edges 22A and/or the support edges 22B of the side walls 22.

In each pair of side walls 22 defining a channel 38, each one of the two side walls 22 is a supporting side wall 22 or a non-supporting side wall 22.

As illustrated on Figure 10, each pair of side walls 22 defining a channel 38 comprising a supporting side wall 22 and a non-supporting side wall 22.

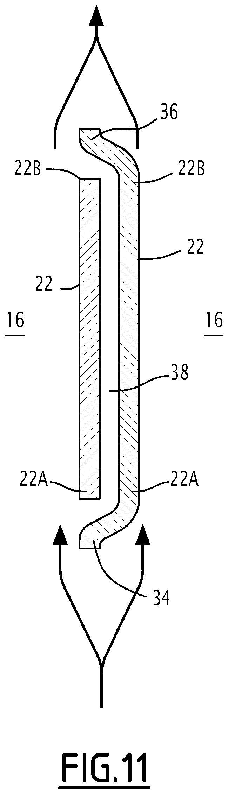

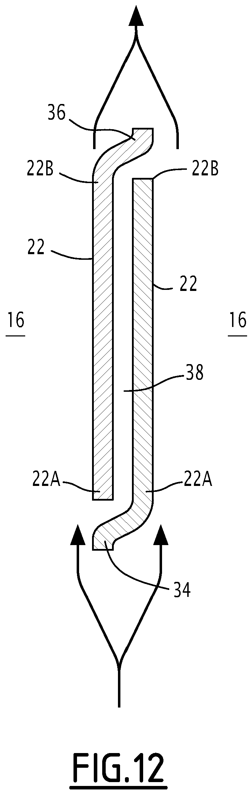

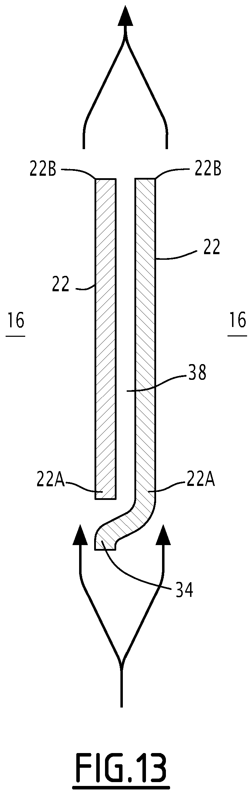

As illustrated on Figures 11 - 13, in some examples, in each pair of side walls 22 defining a channel 38, a lower flap 34 is provided on the lower edge 22 of one of the two side walls 22 and/or an upper flow 36 is provided on the upper edge of one of the two side walls 22.

The provision of a lower flap 34 and/or an upper flap 36 limit the flow of coolant fluid via the channel 38 despite the opening of the channel 38 at the lower edges 22A and/or the upper edges 22B.

This forces more coolant fluid to flow through the cell in contact with the fuel rod 4 received in the cell 16.

As illustrated on Figure 2, the cells of the spacer grid 14 are located at the node of an imaginary rectangular network and/or each spacer grid element 18 has a rectangular or square contour.

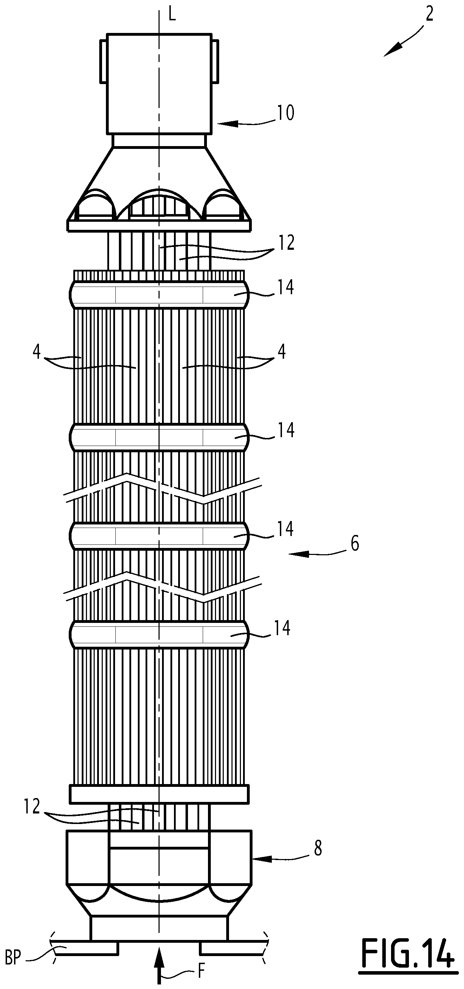

In some examples, as illustrated on Figure 10, the cells of the spacer grid 14 are located at the node of an imaginary triangular network and/or each spacer grid element 18 has a triangular or hexagonal contour. The bundle of fuel rods 4 of the fuel assembly 2 exhibits for example a hexagonal contour. The nuclear fuel assembly 2 is for example designed for a VVER (acronym for Russian "Vodo-Vodianoï Energuetitcheski Reaktor") as illustrated on Figure 14.

As illustrated on Figures 2 and 10, spacer grids 14 are formed of tubular spacer grid elements 18 arranged side-by-side.

In some examples, a spacer grid 14 comprising cells 16 delimited by side walls 22 including at least one pair of side walls 22 applied against each other to form a double-walled structure separating two adjacent cells 16 may be formed of spacer grid elements provided as intersecting strips instead of being formed of tubular spacer grid elements arranged side-by-side.

The spacer grid is for example formed of intersecting strips, each strip comprising a plurality of wall portions, each wall portion defining a respective side wall 22 of a cell, each pair of side walls 22 applied against each other being two wall portions of two distinct strips applied against each other.

Hence, the invention also relates to spacer grid 14 for a nuclear fuel assembly spacer grid 14, the spacer grid 14 comprising cells for receiving a nuclear fuel rod 4, each cell 16 extending along an extension axis A with being delimited by side walls 22, wherein the side walls 22 comprises at least one pair of side walls 22 applied against each other to form a double-walled structure, wherein one of the two side walls 22 is provided with a lower flap 34 protruding from the lower edge of said side wall 22 such as to at least partially cover the lower edge of the other side wall in view along the extension axis A and/or one of the two side walls 22 is provided with an upper flap 34 protruding from the upper edge of said side wall 22 such as to at least partially cover the upper edge of the other side wall in view along the extension axis A.

The variants described above in respect of pair of side walls 22 of spacer grid elements 18 applied against each other also apply to side walls 22 of intersecting strips, in particular as regards the provision of supporting features 26, lower flap 34 and upper flap 36.

In the examples presented in Figure 4 and 10, each pair of side walls 22 applied against each other is formed of two supporting side walls 22 or one supporting side wall 22 and one non-supporting side wall 22.

In other examples, at least one or more pair of side walls 22 applied against each other is formed of two non-supporting side walls 22 applied against each other, with a lower flap 34 and/or an upper flap 36 being provided as in all the examples described above.

A spacer grid 14 comprises side walls 22 applied against each other can be designed with the appropriate stiffness.

The provision of lower flaps 34 and/or upper flaps 36 allows streamlining the flow of the coolant fluid along a pair of side walls 22 applied against each other despite the increase thickness as compared to one single side wall 22.

The spacer grid 14 can thus be provided with a limited resistance to the flow of the coolant fluid, i.e. a limited pressure loss of the coolant fluid when flowing through the spacer grid 14.

The provision of a lower flap 34 and/or an upper flap 36 on a side wall 22 stiffens the side wall 22, thus increasing the stiffness of the spacer grid 14 as a whole. IT thus increases mechanical robustness while reducing the pressure loss coefficient of the spacer grid 14.

Tubular spacer grid elements 18 can be shaped to be arranged side-by-side for forming the spacer grid 14 with implementing the pairs of side walls 22 applied against each other.

In particular, such spacer grid elements 18 can be manufactured easily by cutting and/or shaping a sheet of material and rolling the sheet of material into a tubular shape.

The invention also applies to a spacer grid 14 formed of intersecting strips configured to have wall portions defining side walls 22 of cells 16 applied against each other and provided with lower flaps 34 and/or upper flaps 36.

The invention applies whatever the contour of the cells 16. The invention applies in particular for cells 16 with a polygonal contour with each side wall 22 of the cell 16 exhibiting a shape that is flat or concave toward the inside of the cell 16 or convex toward in the inside of the cell 16, provided side walls 22 of adjacent cells 16 are in contact over a substantial portion or close to each other, such that a lower flap or an upper flap provided on one of the side walls 22 of a pair of adjacent side walls 22 can cover an edge of the other one.

## Claims

1. Spacer grid elements (18) for a nuclear fuel assembly spacer grid (14), each spacer grid element (18) defining at least one side wall (22) of a cell (16) extending along an extension axis (A) for receiving a nuclear fuel rod (4), wherein spacer grid elements (18) are configured to be arranged side-by-side with applying two side walls (22) of two spacer grid elements (18) one against the other, wherein one of the two side walls (22) of at least one pair of side walls (22) applied against each other is provided with a lower flap (34) protruding from the lower edge of said side wall (22) such as to at least partially cover the lower edge of the other side wall in view along the extension axes (A) of the cells and/or one of the two side walls (22) of said at least one pair of side walls (22) applied against each other is provided with an upper flap (34) protruding from the upper edge of said side wall (22) such as to at least partially cover the upper edge of the other side wall in view along the extension axes (A) of the cells (16).

2. Spacer grid elements (18) as in claim 1, wherein one of the two side walls (22) of at least one pair of side walls (22) applied against each other is provided with a lower flap (34) and an upper flap (36).

3. Spacer grid elements (18) as in claim 1 or 2, wherein one of the two side walls (22) of at least one pair of side walls (22) applied against each other is provided with a lower flap (34) and deprived of an upper flap (36).

4. Spacer grid elements (18) as in claim 3, wherein the other one of the two side walls (22) is deprived of a lower flap (34) and an upper flap (36) or is deprived a lower flap (34) and provided with an upper flap (36).

5. Spacer grid elements (18) as in any one of the preceding claims, wherein one of the two sides walls (22) of at least one pair of side walls (22) applied against each other is a supporting side wall (22) provided with a supporting feature (26) protruding inwardly in a cell delimited by said side walls to contact a fuel rod extending in said cell and/or one of the two sides walls (22) of at least one pair of side walls (22) applied against each other is a non-supporting side wall (22) deprived of supporting feature (26) for contacting a fuel rod extending in said cell.

6. Spacer grid elements as in any one of the preceding claims, wherein each spacer grid element (18) includes side walls (22) distributed around the extension axis (A).

7. Spacer grid (14) comprising a plurality of spacer grid elements (18) as in any one of the preceding claims, including spacer grid elements (18) being arranged side-by-side.

8. Spacer grid (14) for a nuclear fuel assembly spacer grid (14), the spacer grid (14) comprising cells for receiving a nuclear fuel rod (4), each cell extending along an extension axis (A) with being delimited by side walls (22), wherein the side walls (22) comprises at least one pair of side walls (22) applied against each other, wherein one of the two side walls (22) is provided with a lower flap (34) protruding from the lower edge of said side wall (22) such as to at least partially cover the lower edge of the other side wall in view along the extension axis (A) and/or one of the two side walls (22) is provided with an upper flap (34) protruding from the upper edge of said side wall (22) such as to at least partially cover the upper edge of the other side wall in view along the extension axis (A).

9. Spacer grid (14) as in claim 8, wherein one of the two side walls (22) of at least one pair of side walls (22) applied against each other is provided with a lower flap (34) and an upper flap (36).

10. Spacer grid (14) as in claim 8 or 9, wherein one of the two side walls (22) of at least one pair of side walls (22) applied against each other is provided with a lower flap (34) and deprived of an upper flap (36),

11. Spacer grid (14) as in claim 10, wherein the other one of the two side walls (22) is deprived of a lower flap (34) and an upper flap (36) or is deprived a lower flap (34) and provided with an upper flap (36).

12. Spacer grid (14) as in any one of the claims 8 - 11, wherein one of the two sides walls (22) of at least one pair of side walls (22) applied against each other is a supporting side wall (22) provided with a supporting feature (26) protruding inwardly in a cell delimited by said side walls to contact a fuel rod extending in said cell and/or one of the two sides walls (22) of at least one pair of side walls (22) applied against each other is a non-supporting side wall (22) deprived of supporting feature (26) for contacting a fuel rod extending in said cell.

13. Spacer grid (14) as in any one of claims 7 - 11, the spacer grid (14) comprising spacer grid elements (18) arranged side-by-side, each spacer grid element (18) defining a respective cell and comprising side walls (22), wherein the two side walls (22) of each pair of side walls (22) applied against each other of the spacer grid (14) are side walls (22) of two adjacent spacer grid elements (18) arranged side-by-side.

14. Spacer grid (14) as in any one of claims 7 - 11, the spacer grid elements (18) are intersecting strips, each comprising a plurality of wall portions, each wall portion defining a respective side wall (22) of a cell, each pair of side walls (22) applied against each other being two wall portions of two distinct strips applied against each other.

15. Nuclear fuel assembly comprising a bundle of fuel rods (4) and an armature (6) for supporting the fuel rods (4), the armature (6) comprising at least one spacer grid (14) according to any one of claims 6 - 13.
